# EUROPEAN PATENT APPLICATION

(11) **EP 4 620 919 A1**
(43) Date of publication of application: **24.09.2025**
(21) Application number: 25164850.7
(22) Date of filing: 19.03.2025
(51) Int. Cl.: C01G 53/10

(54) **METHOD OF PREPARING NICKEL SULFATE SALT**

(30) Priority: 20.03.2024 KR 20240038156
(71) Applicant: SK innovation Co., Ltd., Seoul 03188 (KR)
(72) Inventor: NA, Ji Ye, 34124 Daejeon (KR); KWON, Soo Jin, 34124 Daejeon (KR)
(74) Representative: Thoma, Michael

(57) **Abstract**

In a method of preparing a nickel sulfate salt, a feeding solution including a nickel salt and an aqueous sulfuric acid solution is prepared. The feeding solution is crystallized to produce a mixed liquid containing a nickel sulfate solid. The mixed liquid is subj ected to solid-liquid separation to collect the nickel sulfate salt. The filtrate produced from the solid-liquid separation is recycled together with purging.

## Description

### [BACKGROUND OF THE INVENTION]

### 1. Field of the Invention

The present disclosure relates to a method of preparing a nickel sulfate salt, and more specifically, to a method of preparing a nickel sulfate salt, which includes a purification process.

### 2. Description of the Related Art

Recently, a secondary battery has been developed and widely applied to portable electronic telecommunication devices such as a camcorder, a mobile phone, a laptop computer, etc., and vehicles such as a hybrid vehicle and an electric electric vehicle as a power source thereof. As the secondary battery, a lithium secondary battery has a high operating voltage and a high energy density per unit weight, and is advantageous in terms of a charging speed and light weight, such that development and application thereof have been proceeded in this regard.

For example, the lithium secondary battery includes a cathode active material, and the cathode active material may include a lithium cobalt oxide (LiCoO₂); a lithium nickel oxide (LiNiO₂); a lithium manganese oxide (LiMnO₂, LiMn₂O₄, etc.), a lithium iron phosphate compound (LiFePO₄); an NCM-based lithium metal oxide containing nickel, cobalt and manganese; an NCA-based lithium metal oxide containing nickel, cobalt and aluminum, etc.

As the above-described expensive valuable metals are used for the cathode active material, excessively high costs are required to manufacture the cathode material. In addition, as the environmental protection issue is recently emerging, research on a method of recovering the cathode active material is being conducted. In order to recycle the cathode active material, it is necessary to recover metals from a cathode with high efficiency and high purity.

However, the recovered nickel sulfate salt may include other metals such as lithium, sodium, and the like as impurities. Therefore, a process design capable of preparing high-purity nickel sulfate without causing a decrease in a yield of nickel sulfate is required.

### [SUMMARY OF THE INVENTION]

An object of the present disclosure is to provide a method of preparing a nickel sulfate salt in an efficient manner.

According to a method of preparing a nickel sulfate salt of the present disclosure, a feeding solution which includes a nickel salt and an aqueous sulfuric acid solution is prepared. The feeding solution is crystallized to produce a mixed liquid containing a nickel sulfate solid. The mixed liquid is subjected to solid-liquid separation to collect the nickel sulfate salt. A filtrate produced from the solid-liquid separation is recycled together with purging.

According to exemplary embodiments, the step of recycling a filtrate may include circulating the filtrate to the feeding solution.

According to exemplary embodiments, the purging may include purging 1% by weight to 20% by weight of the filtrate based on a total weight thereof.

According to exemplary embodiments, the purging may include purging 5% by weight to 10% by weight of the filtrate based on the total weight thereof.

According to exemplary embodiments, the recycling may include circulating 90% or more of nickel based on total nickel included in the the filtrate to the feeding solution.

According to exemplary embodiments, the step of producing a mixed liquid may include the steps of: evaporating and concentrating the feeding solution to produce a first solution; and cooling and crystallizing the first solution to produce a second solution as the mixed liquid.

According to exemplary embodiments, the step of preparing a feeding solution may include the steps of: recovering a cathode active material from a lithium secondary battery; and extracting the nickel salt from the cathode active material.

According to exemplary embodiments, the cathode active material may include manganese or cobalt.

According to exemplary embodiments, the feeding solution may include 3% by weight to 10% by weight of nickel based on the total weight thereof.

According to exemplary embodiments, the feeding solution may further include lithium impurity or sodium impurity.

According to exemplary embodiments, a content of the lithium impurity may be 0.4% by weight or less based on a total weight of the feeding solution.

According to exemplary embodiments, a content of the sodium impurity may be 0.5% by weight or less based on a total weight of the feeding solution.

According to exemplary embodiments, the nickel sulfate salt may include the lithium impurity or the sodium impurity in an amount of 500 ppm or less.

In accordance with the method of preparing a nickel sulfate salt according to the embodiments of the present disclosure, a feeding solution including a nickel salt and an aqueous sulfuric acid solution may be crystallized to produce a mixed liquid containing a nickel sulfate solid. The mixed liquid may be subjected to solid-liquid separation, and the filtrate produced from the solid-liquid separation may be recycled together with purging. Through purging and recycling of the filtrate, a nickel sulfate salt may be continuously and repeatedly prepared. In addition, the yield may be improved without a decrease in the purity of the nickel sulfate salt.

### [BRIEF DESCRIPTION OF THE DRAWINGS]

The above and other objects, features and other advantages of the present disclosure will be more clearly understood from the following detailed description taken in conjunction with the accompanying drawings, in which:
FIG. 1 is a schematic flowchart for describing processes of a method of preparing a nickel sulfate salt according to exemplary embodiments; and
FIG. 2 is a schematic view for describing a system of preparing a nickel sulfate salt according to exemplary embodiments.

### [DETAILED DESCRIPTION OF THE INVENTION]

The embodiments of the present disclosure provide a method of preparing a nickel sulfate salt.

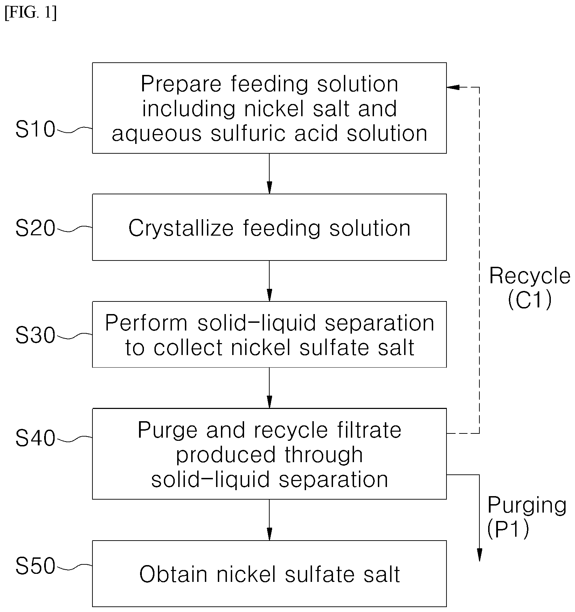

FIG. 1 is a schematic flowchart for describing processes of a method of preparing a nickel sulfate salt according to exemplary embodiments.

Referring to FIG. 1, a feeding solution including a nickel salt and an aqueous sulfuric acid solution is prepared (e.g., process S10).

The feeding solution may include nickel sulfate (NiSO₄) as a nickel salt. In some embodiments, the nickel sulfate (NiSO₄) may be present in a dissolved state.

In some embodiments, the feeding solution may be prepared through a step of recovering a cathode active material from a lithium secondary battery; and a step of extracting the nickel salt from the cathode active material.

For example, the cathode active material may be recovered from a cathode of the lithium secondary battery, and the nickel salt may be extracted from the recovered cathode active material.

For example, the cathode may include a cathode current collector (e.g., aluminum (Al)) and a cathode active material layer, wherein the cathode active material layer may include a conductive material and a binder together with the above-described cathode active material.

The cathode may be, for example, a cathode obtained from a used waste lithium secondary battery, or a cathode damaged or failed in the manufacturing process.

For example, the cathode active material may include lithium and a transition metal. The transition metal may include nickel. In some embodiments, the transition metal may include manganese or cobalt.

In some embodiments, the cathode active material may include an NCM-based lithium metal composite oxide including nickel, cobalt and manganese. However, the embodiments of the present disclosure may be commonly applied to not only a cathode material including the NCM-based lithium metal composite oxide, but also a cathode material of a lithium metal composite oxide including nickel. For example, the cathode active material may include an NCA-based lithium metal composite oxide containing nickel, cobalt and aluminum.

For example, the cathode active material layer may be separated from the cathode to collect the cathode active material mixture.

In some embodiments, in order to reduce the current collector, the conductive material and/or the binder component(s) remaining in the cathode active material mixture, precipitation using an alkali, filtration, centrifugation and washing processes, etc. may be further performed.

For example, the cathode active material mixture may be subjected to sulfuric acid treatment together with a reducing agent to form a cathode active material solution.

For example, the transition metal included in the cathode active material solution may be extracted.

For example, the reducing agent may include at least one of hydrogen peroxide (H₂O₂), SO₂, Na₂S, NaHS, Na₂S₂O₅, NaHSO₃, Na₂S₂O₃, KHSO₃, K₂SO₃, FeSO₄, H₂S, glucose, sucrose, and ascorbic acid. When using the above type of reducing agent, extraction of the transition metal included in the cathode active material mixture may be easily implemented.

For example, when the reducing agent is hydrogen peroxide, the above-described extraction may be performed through a reaction represented by Scheme 1 below.

[Scheme 1] 2Li(NCM)O₂ + H₂O₂ + 3H₂SO₄ → Li₂SO₄ + 2(NCM)SO₄ + 4H₂O + O₂

For example, an amount of the reducing agent used may be 0.5 mole or less based on 1 mole of the cathode active material mixture. However, this is merely an example, and it is not limited thereto.

In some embodiments, a transition metal extractant may be introduced into the cathode active material solution. For example, by introducing the transition metal extractant, nickel sulfate (NiSO₄), cobalt sulfate (CoSO₄) and manganese sulfate (MnSO₄) may be produced and collected, respectively, from Ni, Co and Mn included in the cathode active material solution.

For example, the transition metal extractant may include at least one of a phosphoric acid extractant, a phosphate extractant, a phosphine oxide extractant and a carboxylic acid extractant.

For example, the extractant may include at least one of di-2-ethylhexyl phosphoric acid (D2EHPA), bis(2,4,4-trimethylpentyl) phosphinic acid (Cyanex 272), 2-ethylhexyl phosphoric acid mono-2-ethylhexyl ester (PC88A), tributyl phosphate, trioctyl phosphine oxide and alkyl monocarboxylic acid.

In some embodiments, the above-described extractant may be used by diluting it in an organic solvent diluent. For example, the organic solvent may include at least one of kerosene, hexane, benzene and toluene.

In some embodiments, the transition metal extraction may be performed while increasing pH stepwise. For example, the cathode active material solution includes Ni, Co and Mn, and in this case, Mn, Co and Ni may be sequentially extracted while increasing the pH of the cathode active material solution.

For example, while increasing the pH of the cathode active material solution stepwise, manganese sulfate, cobalt sulfate and nickel sulfate may be sequentially extracted.

In some embodiments, a transition metal may be extracted from the cathode active material solution to prepare a feeding solution.

For example, while increasing the pH of the cathode active material solution stepwise, manganese sulfate and cobalt sulfate may be sequentially extracted, and the feeding solution may be prepared from the remaining cathode active material solution. However, the method of preparing the feeding solution is not limited to the above-described method.

For example, the feeding solution may include nickel sulfate included in the aqueous sulfuric acid solution, and unextracted residual manganese sulfate or cobalt sulfate may be included therein as an impurity.

For example, the feeding solution may further include lithium or sodium included in the cathode active material as an impurity.

According to exemplary embodiments, the feeding solution may include nickel in an amount of 3% by weight ("wt%") to 10 wt% based on a total weight thereof. In one embodiment, the feeding solution may include nickel in an amount of 4 wt% to 10 wt%, 4 wt% to 9 wt%, or 5 wt% to 8 wt% based on the total weight thereof. Within the above range, the purity and yield of the nickel sulfate salt may be improved by purging and recycling to be described below.

According to exemplary embodiments, the feeding solution may include a lithium impurity in an amount of 0.5 wt% or less based on the total weight thereof. In one embodiment, the feeding solution may include a lithium impurity in an amount of 0.4 wt% or less, 0.35 wt% or less, 0.3 wt% or less, or 0.2 wt% or less based on the total weight thereof.

According to exemplary embodiments, the feeding solution may include a sodium impurity of 0.6 wt% or less based on the total weight thereof. In one embodiment, the feeding solution may include a sodium impurity of 0.5 wt% or less, 0.4 wt% or less, 0.35 wt% or less, 0.3 wt% or less, or 0.2 wt% or less based on the total weight thereof.

Lower limits of the content of lithium and the content of sodium are not particularly limited, but may be, for example, 0.001 wt% or more, or 0.002 wt% or more based on the total weight of the feeding solution.

When preparing a nickel sulfate salt using a feeding solution including nickel, lithium or sodium within the above range, the production of a nickel sulfate complex may be suppressed regardless of a ratio of the filtrate to be purged, such that a nickel sulfate salt having a purity of 99% or more may be produced.

The content of lithium and the content of sodium included in the feeding solution may be controlled, and the content may be determined in consideration of a crystallization temperature to be described below. In addition, the crystallization temperature to be described below may be determined by checking the content of lithium and the content of sodium included in the feeding solution.

For example, when the crystallization temperature of the feeding solution is high, the contents of lithium and sodium included in the feeding solution may be decreased.

In one embodiment, in crystallization of the feeding solution to be described below, when the temperature of evaporation and concentration is 60°C or lower, the content of lithium included in the feeding solution may be 0.4 wt% or less, and the content of sodium may be 0.6 wt% or less, or 0.4 wt% or less.

In one embodiment, in the crystallization of the feeding solution to be described below, when the temperature of the cooling crystallization is 20°C or lower, the content of lithium included in the feeding solution may be 0.4 wt% or less, and the content of sodium may be 0.6 wt% or less, or 0.4 wt% or less.

In one embodiment, in the crystallization of the feeding solution to be described below, when the temperature of the evaporation and concentration is higher than 60°C, the content of lithium included in the feeding solution may be 0.2 wt% or less, or 0.15 wt% or less, and the content of sodium may be less than 0.3 wt%, 0.25 wt% or less, 0.2 wt% or less, 0.15 wt% or less, or 0.10 wt% or less.

In one embodiment, in the crystallization of the feeding solution to be described below, when the temperature of the cooling crystallization is higher than 20°C, the content of lithium included in the feeding solution may be 0.2 wt% or less, or 0.15 wt% or less, and the content of sodium may be less than 0.3 wt%, 0.25 wt% or less, 0.2 wt% or less, 0.15 wt% or less, or 0.10 wt% or less.

When controlling the content of lithium or sodium according to the temperature of evaporation and concentration, or adjusting the temperature of evaporation and concentration according to the content of lithium or sodium, the production of the nickel sulfate complex may be suppressed regardless of the ratio of the filtrate to be purged, such that a nickel sulfate salt having a purity of 99% or more may be prepared.

The feeding solution is crystallized (e.g., process S20).

For example, the feeding solution may be crystallized through changing the temperature thereof. The temperature changing may include both heating and cooling. For example, the temperature changing of the feeding solution may include heating the feeding solution, and then cooling the same.

According to exemplary embodiments, the feeding solution may be evaporated and concentrated to produce a first solution.

For example, the evaporation and concentration may include an evaporation process under reduced pressure. For example, water included in the feeding solution may be evaporated by the evaporation and concentration.

In some embodiments, the evaporation and concentration of the feeding solution may be performed at 40°C to 80°C.

Within the above temperature range, a concentration of the nickel sulfate salt included in the feeding solution may be increased, and thereby, an amount of nickel sulfate salt prepared after the cooling crystallization to be described below may be increased.

According to exemplary embodiments, the first solution may be cooled and crystallized to produce a second solution.

In some embodiments, the cooling crystallization of the first solution may be performed at 0°C to 40°C.

Within the above temperature range, a nickel sulfate solid may be formed by supersaturation of the nickel sulfate salt included in the first solution.

The temperature of the evaporation and concentration or cooling crystallization may be determined in consideration of the content of impurities (lithium, sodium, etc.) included in the feeding solution.

According to exemplary embodiments, the second solution may include a nickel sulfate solid.

The second solution as the mixed liquid is subjected to solid phase-liquid phase separation (solid-liquid separation) to collect the nickel sulfate salt (for example, process S30).

For example, a nickel sulfate salt in a solid state and a filtrate in a liquid state may be separated from the mixed liquid.

According to exemplary embodiments, the nickel sulfate salt may include nickel sulfate hexahydrate (NiSO₄·6H₂O).

The nickel sulfate salt may be collected through a filtration process.

As the filtration process, for example, a solid-liquid separation process through a filter press or a centrifugal dehydration process may be performed. Through the filtration process, the liquid phase of the mixed liquid may be at least partially removed and separated, thereby a nickel sulfate salt in solid phase may be extracted.

The filtrate may include a liquid separated from the nickel sulfate salt.

In some embodiments, purging of the mixed liquid may be performed together in the filtration process.

The filtrate produced through the solid-liquid separation is purged (e.g., purging (P1)). The filtrate is recycled to the feeding solution (e.g., recycling (C1)).

For example, the filtrate may include nickel. For example, the nickel may include residual nickel which is not solidified in the above-described processes.

For example, the filtrate may be fractionated and purged, and the remaining portion may be recycled. For example, the filtrate may include a purge fraction and a residual fraction. For example, the compositions of the purge fraction and the residual fraction may be substantially the same each other.

According to exemplary embodiments, recycling of the filtrate may include circulating the residual fraction to the feeding solution.

For example, the residual fraction of the filtrate excluding the purge fraction of the filtrate may be included in the feeding solution. Since an amount of wastewater treatment may be reduced by the recycling, it is possible to prepare the nickel sulfate salt in an environmentally friendly manner.

According to exemplary embodiments, 1 wt% to 40 wt% of the filtrate may be purged based on the total weight thereof. In some embodiments, 1 wt% to 30 wt%, 1 wt% to 25 wt%, 1 wt% to 20 wt%, 3 wt% to 20 wt%, or 5 wt% to 15 wt% of the filtrate may be purged based on the total weight thereof.

For example, the content of the purge fraction may be equivalent to the above range.

In some embodiments, 5 wt% to 10 wt% of the filtrate may be purged based on the total weight thereof.

A recovery rate of nickel may differ depending on whether purging of the filtrate is performed and a weight % of purge stream. In addition, the purity of nickel sulfate salts repeatedly prepared may differ depending on the weight % of purge stream of the filtrate.

For example, if the filtrate is not purged, impurities contained in the filtrate may be included in the feeding solution in a large quantity. Accordingly, the purity of the nickel sulfate salt may be decreased.

For example, if the filtrate is purged exceeding the above range, nickel may be removed unnecessarily. Accordingly, the recovery rate of nickel may be reduced.

For example, if the filtrate is purged less than the above range, impurities (e.g., lithium, sodium, etc.) may be accumulated in the manufacturing process of the nickel sulfate salt, which is repeatedly and continuously performed, and thereby, recycling of the filtrate may be impossible.

In some embodiments, the recycling may circulate 90% or more of nickel based on total nickel included in the filtrate to the feeding solution.

For example, 90% or more of the total weight of nickel contained in the filtrate may be included in the feeding solution. Accordingly, the manufacturing efficiency of the nickel sulfate salt may be improved.

According to exemplary embodiments, the recovery rate of nickel through the purging of the filtrate and the recycling of the filtrate may be 90% or more.

The recovery rate of nickel may be calculated according to Equation 1 below. Recovery rate of nickel (%) = (Weight of nickel included in nickel sulfate salt prepared in steady state / Weight of nickel in feeding solution) × 100

Here, the steady state may mean a state where the purity, weight, and the like of the nickel sulfate salt repeatedly prepared including the recycling step according to the above-described embodiments are maintained constant.

For example, a first nickel sulfate salt and a first filtrate may be obtained from the first feeding solution through the above-described respective processes (S10 to S40). A second feeding solution, which is distinct from the first feeding solution, may be prepared, and the first filtrate may be recycled with the second feeding solution. A second nickel sulfate salt and a second filtrate may be obtained from the solution including the second feeding solution and the first filtrate through the above-described respective processes. The above processes may be repeated so that the purity, weight, and the like of the nickel sulfate salt prepared are constant. When the purity, weight, and the like of the nickel sulfate salt repeatedly prepared are maintained constant, it is considered a steady state, and the weight of nickel contained in the nickel sulfate salt prepared in the steady state may be measured to calculate the recovery rate.

For example, the steady state standard may refer to a case where the purity of the prepared nickel sulfate salt is constant three or more times. For example, the steady state may refer to a case where the purity of the prepared nickel sulfate salt is maintained within ±0.1% three or more times.

In some embodiments, the recovery rate of the nickel may be 93 wt% or more, 95 wt% or more, 97 wt% or more, or 98 wt% or more.

According to exemplary embodiments, a step of washing the nickel sulfate salt may be further included.

For example, the nickel sulfate salt may be washed to remove solution residues, remove impurities, etc. For example, lithium or sodium may be included as impurities in the nickel sulfate salt, and the impurities may be removed or reduced through washing.

In some embodiments, the washing step may include washing the nickel sulfate salt with a saturated nickel solution.

For example, the amount of the saturated nickel solution used may vary depending on the amount of the separated nickel sulfate salt. For example, a saturated nickel solution corresponding to 1 to 10 times the weight of the separated nickel sulfate salt may be used.

In some embodiments, a content of the lithium impurity in the nickel sulfate salt may be 500 ppm or less. In some embodiments, a content of the sodium impurity in the nickel sulfate salt may be 500 ppm or less.

In some embodiments, the content of the lithium impurity in the nickel sulfate salt may be 500 ppm or less, 300 ppm or less, 200 ppm or less, 150 ppm or less, or 100 ppm or less.

In some embodiments, the content of the sodium impurity in the nickel sulfate salt may be 500 ppm or less, 300 ppm or less, 200 ppm or less, 150 ppm or less, or 100 ppm. The sodium impurity may be included within the above range.

According to exemplary embodiments, the saturated nickel solution may be a saturated nickel sulfate solution based on 20°C to 30°C. For example, the content of nickel included in the saturated nickel sulfate solution may be 1 wt% to 20 wt%.

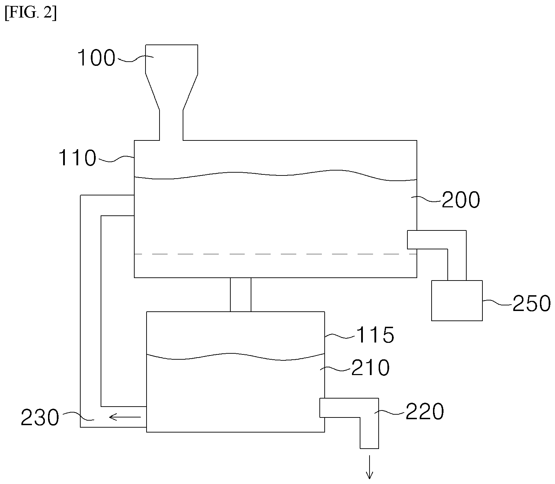

FIG. 2 is a schematic view for describing a system of preparing a nickel sulfate salt according to exemplary embodiments.

As shown in FIG. 2, a supply unit 100 configured to supply a nickel salt and an aqueous sulfuric acid solution may be connected to a reactor 110. A feeding solution 200 including a nickel salt and an aqueous sulfuric acid solution may be supplied to the reactor 110 through the supply unit 100. Alternatively, the nickel salt and the aqueous sulfuric acid solution supplied from the supply unit 100 may be mixed in the reactor 110 to produce the feeding solution 200. The feeding solution 200 may be crystallized in the reactor 110 to produce a nickel sulfate solid. A nickel sulfate salt collection unit 250 configured to collect the produced nickel sulfate solid may be connected to the reactor 110. A filtrate collection unit 115 may be connected to the reactor 110. The filtrate collection unit 115 may be connected to a bottom part of the reactor 110. A filtrate 210 from which the nickel sulfate salt is separated may be transferred to the filtrate collection unit 115 from the reactor 110.
A purge path 220 configured to purge the filtrate 210 may be connected to the filtrate collection unit 115. The purge path 220 may include one or more conduits.
A recycle path 230 configured to supply the filtrate 210 to the reactor 110 may be connected to the filtrate collection unit 115 and the reactor 110. The recycle path 230 may include one or more conduits.

According to exemplary embodiments, the reactor 110 may include a temperature control unit (not shown) including a temperature measurement instrument (not shown) and a controller (not shown). The temperature control unit may be connected to the reactor 110. The temperature control unit may be present at least partially inside the reactor 110. For example, at least one temperature measurement instrument may be positioned inside the reactor to measure the temperature of the feeding solution 200 in at least one location and the at least one temperature instrument may be operatively coupled to a temperature controller of the temperature control unit positioned outside of the reactor 110.

According to exemplary embodiments, the purge path 220 may be directly connected to the reactor 110. When the purge path 220 is directly connected to the reactor 110, the filtrate to be purged may be purged without passing through the filtrate collection unit 115.

### Examples and Comparative Examples

### Example 1

An aqueous sulfuric acid solution including 6.6 wt% of nickel, 0.11 wt% of lithium, and 0.03 wt% of sodium based on the total weight of the solution, and containing 2 to 3 of wt% sulfuric acid was used as a feeding solution.

Evaporation under reduced pressure was performed while maintaining the temperature of the feeding solution at 60°C to produce a first solution including a nickel sulfate salt. Thereafter, the first solution was cooled by decreasing the temperature thereof to 0°C to produce a mixed liquid including a solid nickel sulfate salt (a second solution). The mixed liquid was filtered through a vacuum pump to prepare a nickel sulfate salt.

The nickel sulfate salt was washed with a saturated nickel sulfate solution (containing about 11 wt% of nickel in the total weight of the solution) of about 3 times weight based on the total weight of the nickel sulfate salt, thus to obtain nickel sulfate hexahydrate (NiSO₄·6H₂O).

In addition, 5 wt% of the mixed liquid based on the total weight of the filtrate was purged, and the filtrate was recycled to the feeding solution, and the same process was repeatedly performed to prepare nickel sulfate hexahydrate.

### Examples 1-2 to 1-7

Nickel sulfate hexahydrates were obtained by performing the same processes as in Example 1 except that the ratios of the filtrate to be purged were changed to 10 wt% (Example 1-2), 20 wt% (Example 1-3), 30 wt% (Example 1-4), 40 wt% (Example 1-5), 60 wt% (Example 1-6), and 80 wt% (Example 1-7), respectively.

### Examples 2-1 to 2-12

Nickel sulfate hexahydrates were obtained by performing the same processes as in Example 1 except that the content of lithium and the content of sodium included in the feeding solution were adjusted according to Table 1 below.

**[TABLE 1]**

| Item | Impurity content | | Ratio of filtrate to be purged (wt%) |
|---|---|---|---|
| | Li (wt%) | Na (wt%) | |
| Example 2-1 | 0.22 | 0.15 | 5-30 |
| Example 2-2 | 0.22 | 0.30 | 5-30 |
| Example 2-3 | 0.22 | 0.45 | 5-30 |
| Example 2-4 | 0.22 | 0.60 | 5-30 |
| Example 2-5 | 0.33 | 0.15 | 5-30 |
| Example 2-6 | 0.33 | 0.30 | 5-30 |
| Example 2-7 | 0.33 | 0.45 | 5-30 |
| Example 2-8 | 0.33 | 0.60 | 5-30 |
| Example 2-9 | 0.44 | 0.15 | 5-30 |
| Example 2-10 | 0.44 | 0.30 | 5-30 |
| Example 2-11 | 0.44 | 0.45 | 5-30 |
| Example 2-12 | 0.44 | 0.60 | 5-30 |

### Example 3

Nickel sulfate hexahydrate was obtained by performing the same processes as in Example 1 except that the evaporation under reduced pressure was performed at 80°C and the cooling temperature of the first solution was changed to 40°C.

### Examples 3-2 to 3-9

Nickel sulfate hexahydrate was obtained by performing the same processes as in Example 3 except that the content of lithium and the content of sodium included in the feeding solution were adjusted according to Table 2 below.

**[TABLE 2]**

| Item | Impurity content | | Ratio of filtrate to be purged (wt%) |
|---|---|---|---|
| | Li (wt%) | Na (wt%) | |
| Example 3-2 | 0.11 | 0.00 | 5-30 |
| Example 3-3 | 0.11 | 0.15 | 5-30 |
| Example 3-4 | 0.11 | 0.30 | 5-30 |
| Example 3-5 | 0.11 | 0.45 | 5-30 |
| Example 3-6 | 0.22 | 0.00 | 5-30 |
| Example 3-7 | 0.22 | 0.15 | 5-30 |
| Example 3-8 | 0.22 | 0.30 | 5-30 |
| Example 3-9 | 0.22 | 0.45 | 5-30 |

### Comparative Example

Nickel sulfate hexahydrate was obtained by performing the same processes as in Example 1 except that the filtrate was not purged.

### Experimental Example

### Experimental Example 1. Analysis of recycle ratio

Recovery rates of nickel were calculated from the weights of nickel included in the nickel sulfates obtained in the above-described examples and comparative example. Specifically, a total weight of nickel included in the feeding solution and a total weight of nickel after reaching the steady state were calculated, and the recovery rate was calculated according to Equation 1 below. The steady state means a state where the purity, weight, and the like of the nickel sulfate repeatedly prepared including the recycle process are maintained constant. Recovery rate of nickel (%) = (Weight of nickel included in nickel sulfate salt prepared in steady state / Weight of nickel in feeding solution) × 100

Results of the above Examples 1 to 1-7 and the comparative example are shown in Table 3 below, and results of the above Examples 2-1 to 3-9 are shown in Table 4 below.

### Experimental Example 2. Analysis of purity

Contents of lithium and sodium included in the nickel sulfate hexahydrate obtained in some of the above-described examples and comparative example were analyzed through ICP analysis, and purities of the nickel sulfate salts were calculated.

Results of the above Examples 1 to 1-7 are shown in Table 3 below.

The results according to the above Examples 2-1 to 3-9 were evaluated according to the following standards, and results thereof are described in Table 4 below.

### <Evaluation standards for nickel sulfate hexahydrate production>

∘: When only nickel sulfate hexahydrate is produced regardless of the ratio of the filtrate to be purged
△: When a nickel sulfate hexahydrate and/or a complex (such as Na₂Ni(SO₄)₂(H₂O)₄) is/are produced depending on the ratio of the filtrate to be purged
X: When both a nickel sulfate hexahydrate and a complex (such as Na₂Ni(SO₄)₂·(H₂O)₄) are produced or only a complex (such as Na2Ni(SO4)2·(H2O)4) is produced regardless of the ratio of the filtrate to be purged

**[TABLE 3]**

| Item | Nickel sulfate hexahydrate | | Recovery rate of | |
|---|---|---|---|---|
| | Impurity content | | Purity (%) | nickel (%) |
| | Li (ppm) | Na (ppm) | | |
| Example 1 | 190.2 | 167.7 | 99.80 | 99.92 |
| Example 1-2 | 98.0 | 92.0 | 99.89 | 99.81 |
| Example 1-3 | 50.9 | 49.5 | 99.94 | 97.28 |
| Example 1-4 | 35.6 | 35.0 | 99.96 | 93.27 |
| Example 1-5 | 27.9 | 27.6 | 99.97 | 89.53 |
| Example 1-6 | 20.2 | 20.1 | 99.98 | 82.83 |
| Example 1-7 | 16.3 | 16.3 | 99.98 | 77.04 |
| Comparative Example | 881.4 | 628.9 | 99.1 | 100 |

**[TABLE 4]**

| Item | Analysis of nickel sulfate hexahydrate production | Recovery rate of nickel according to ratio of filtrate to be purged (%) | | | |
|---|---|---|---|---|---|
| | | 5 wt% | 10 wt% | 20 wt% | 30 wt% |
| Example 2-1 | ○ | 97.12 | 97.14 | 96.12 | 93.69 |
| Example 2-2 | ○ | 97.69 | 96.77 | 95.64 | 94.37 |
| Example 2-3 | ○ | 95.19 | 95.19 | 93.83 | 92.36 |
| Example 2-4 | X | 94.77 | 93.66 | 92.13 | 90.47 |
| Example 2-5 | ○ | 96.33 | 96.33 | 96.33 | 94.18 |
| Example 2-6 | ○ | 96.86 | 96.85 | 95.89 | 93.55 |
| Example 2-7 | Δ | 96.51 | 95.46 | 94.27 | 92.96 |
| Example 2-8 | Δ | 96.86 | 96.85 | 95.89 | 93.55 |
| Example 2-9 | ○ | 94.39 | 94.37 | 94.36 | 93.25 |
| Example 2-10 | ○ | 93.82 | 93.79 | 93.81 | 92.59 |
| Example 2-11 | ○ | 94.46 | 94.44 | 93.26 | 93.27 |
| Example 2-12 | X | 93.94 | 93.94 | 93.95 | 91.36 |
| Example 3-2 | ○ | 95.87 | 97.65 | 95.88 | 88.43 |
| Example 3-3 | ○ | 96.22 | 97.88 | 96.21 | 92.71 |
| Example 3-4 | ○ | 93.12 | 93.10 | 93.12 | 87.54 |
| Example 3-5 | Δ | 90.47 | 90.47 | 85.55 | 77.30 |
| Example 3-6 | Δ | 94.99 | 96.74 | 94.99 | 91.75 |
| Example 3-7 | ○ | 94.66 | 96.85 | 94.67 | 94.66 |
| Example 3-8 | ○ | 94.15 | 94.11 | 94.16 | 90.29 |
| Example 3-9 | Δ | 92.34 | 92.36 | 88.40 | 79.87 |

Referring to Table 3 above, in the case of Examples 1 and Examples 1-1 to 1-7 where the filtrate was purged and recycled, the content of impurities included in the nickel sulfate hexahydrate was reduced.

In the case of Examples 1-5 to 1-7 where 40 wt% or more of the filtrate based on the total weight thereof was purged, it was shown that the recovery rate of nickel was less than 90%. In the case of Example 1-4 where 30 wt% of the filtrate was purged, it was shown that the recovery rate of nickel was less than 95%.

In the case of the comparative examples where the filtrate was not purged, it was shown that the content of impurities was significantly high.

Referring to Table 4 above, depending on the content of lithium and the content of sodium included in the feeding solution, the evaporation temperature, or the cooling temperature, there were cases where the complexes such as Li₂SO₄·H₂O, Na₂SO₄·NiSO₄·4H₂O, 3Na₂SO₄·Li₂SO₄·12H₂O, and Na₂SO₄·10H₂O were produced or the recovery rate of nickel was decreased.

Regardless of the concentrations of lithium and sodium in the feeding solution, when the ratio of the filtrate to be purged was 30 wt% or more, the recovery rate of nickel was equivalent to less than 95%.

In Examples 2-1 to 2-12 where the lithium concentration and sodium concentration in the feeding solution were adjusted without changing the evaporation temperature and cooling temperature, when the sodium concentration of the feeding solution was greater than 0.4 wt%, there were cases where a nickel sulfate complex was produced.

In Examples 2-9 to 2-12 where the concentration of lithium in the feeding solution was greater than 0.4 wt%, even if the ratio of the solution to be purged corresponded to 10 wt%, the recovery rate of nickel was equivalent to less than 95%.

In Examples 2-3, 2-4, 2-7, 2-11, and 2-12 where the concentration of sodium in the feeding solution was greater than 0.4 wt%, when the ratio of the filtrate to be purged was 20 wt%, there were cases where the recovery rate of nickel was less than 95%.

In Examples 3-2 to 3-9 where the evaporation temperature and cooling temperature were changed and the lithium concentration and sodium concentration in the feeding solution were adjusted, when the lithium concentration in the feeding solution was greater than 0.2 wt% or the sodium concentration was greater than 0.4 wt%, there were cases where a nickel sulfate complex was produced.

In Examples 3-6 to 3-9 where the concentration of lithium in the feeding solution was greater than 0.2 wt%, even if the ratio of the filtrate to be purged corresponded to 20 wt%, the recovery rate of nickel was equivalent to less than 95%.

In Examples 3-4, 3-5, 3-8, and 3-9 where the concentration of sodium in the feeding solution was 0.3 wt% or more, even if the ratio of the filtrate to be purged corresponded to 10 wt%, the recovery rate of nickel was equivalent to less than 95%.

## Claims

1. A method of preparing a nickel sulfate salt comprising the steps of:
preparing a feeding solution which comprises a nickel salt and an aqueous sulfuric acid solution;
crystallizing the feeding solution to produce a mixed liquid containing a nickel sulfate solid;
performing solid-liquid separation on the mixed liquid to collect the nickel sulfate salt; and
recycling a filtrate produced from the solid-liquid separation together with purging.

2. The method of preparing a nickel sulfate salt according to claim 1, wherein the step of recycling a filtrate comprises circulating the filtrate to the feeding solution.

3. The method of preparing a nickel sulfate salt according to claim 1 or 2, wherein the purging comprises purging 1% by weight to 20% by weight of the filtrate based on a total weight thereof.

4. The method of preparing a nickel sulfate salt according to claim 1 or 2, wherein the purging comprises purging 5% by weight to 10% by weight of the filtrate based on the total weight thereof.

5. The method of preparing a nickel sulfate salt according to any one of claims 1 to 4, wherein the recycling comprises circulating 90% or more of nickel based on total nickel included in the the filtrate to the feeding solution.

6. The method of preparing a nickel sulfate salt according to any one of claims 1 to 5, wherein the step of producing a mixed liquid comprises the steps of:
evaporating and concentrating the feeding solution to produce a first solution; and
cooling and crystallizing the first solution to produce a second solution as the mixed liquid.

7. The method of preparing a nickel sulfate salt according to any one of claims 1 to 6, wherein the step of preparing a feeding solution comprises the steps of:
recovering a cathode active material from a lithium secondary battery; and
extracting the nickel salt from the cathode active material.

8. The method of preparing a nickel sulfate salt according to claim 7, wherein the cathode active material comprises manganese or cobalt.

9. The method of preparing a nickel sulfate salt according to any one of claims 1 to 8, wherein the feeding solution comprises 3% by weight to 10% by weight of nickel based on the total weight thereof.

10. The method of preparing a nickel sulfate salt according to any one of claims 1 to 9, wherein the feeding solution further comprises lithium impurity or sodium impurity.

11. The method of preparing a nickel sulfate salt according to claim 10, wherein a content of the lithium impurity is 0.4% by weight or less based on a total weight of the feeding solution.

12. The method of preparing a nickel sulfate salt according to claim 10 or 11, wherein a content of the sodium impurity is 0.5% by weight or less based on a total weight of the feeding solution.

13. The method of preparing a nickel sulfate salt according to claim 10, wherein the nickel sulfate salt comprises the lithium impurity or the sodium impurity in an amount of 500 ppm or less.

14. The method of preparing a nickel sulfate salt according to any one of claims 1 to 13, wherein the nickel sulfate salt comprises nickel sulfate hexahydrate (NiSO₄·6H₂O).

15. The method of preparing a nickel sulfate salt according to any one of claims 1 to 14, wherein at least one of the following (a) to (c) is provided:
(a) in the crystallization of the feeding solution, evaporation and concentration of the feeding solution is effected at a temperature ranging from 30°C to 90°C or from 40°C to 80°C, wherein, when the temperature of evaporation and concentration is 60°C or lower, a content of lithium included in the feeding solution is 0.4 wt% or less, and a content of sodium is 0.6 wt% or less, or 0.4 wt% or less, and, when the temperature of the evaporation and concentration is higher than 60°C, the content of lithium included in the feeding solution is 0.2 wt% or less or 0.15 wt% or less, and the content of sodium is less than 0.3 wt%, 0.25 wt% or less, 0.2 wt% or less, 0.15 wt% or less, or 0.10 wt% or less;
(b) the recycling of the filtrate includes fractionating the filtrate into a purging fraction and a residual fraction, and circulating the residual fraction of the filtrate excluding the purged fraction to the feeding solution;
(c) washing the nickel sulfate salt to remove impurities, wherein the washing step includes washing the nickel sulfate salt with a saturated nickel solution, in particular a saturated nickel solution corresponding to 1 to 10 times the weight of the separated nickel sulfate salt.
